# EUROPÄISCHE PATENTSCHRIFT

(11) **EP 0 885 788 B1**
(45) Veröffentlichungstag und Bekanntmachung des Hinweises auf die Patenterteilung: **04.09.2002**
(21) Anmeldenummer: 98110867.3
(22) Anmeldetag: 15.06.1998
(51) Int. Cl.: B60R 25/04

(54) **Verfahren zur Stillegung eines Fahrzeugs**
Method for immobilising a vehicle
Procédé d'immobilisation pour véhicules

(30) Priorität: 18.06.1997 DE 19725669
(43) Veröffentlichungstag der Anmeldung: 23.12.1998
(73) Patentinhaber: DaimlerChrysler AG, 70567 Stuttgart (DE)
(72) Erfinder: Dilz, Bernhardt, 71067 Sindelfingen (DE); Kollbach, Dietbert, 73733 Esslingen (DE); Robitschko, Peter, 71069 Sindelfingen (DE)

(56) Entgegenhaltungen:
- DE-U- 29 508 903
- GB-A- 2 305 285
- US-A- 4 292 620

## Beschreibung

Durch den Einsatz von Wegfahrsperren haben sich die Diebstahlmethoden geändert. So haben sich die organisierten Diebstahlbanden darauf spezialisiert, ein Fahrzeug mittels eines Transporter an einen anderen Ort zu bringen, oder den Fahrer zur Herausgabe des Schlüssels zu zwingen (Car-Jacking). Deshalb werden bereits Ortungs- und Stilllegungssysteme zur Bekämpfung von Fahrzeugdiebstählen sowie zum gezielten Eingreifen bei Car-Jacking angeboten. Diese bekannten Stilllegungssysteme können teils sofort nach Aussenden des entsprechenden Signals oder erst bei stehendem Fahrzeug wirken.

Die Erfindung betrifft ein Verfahren bzw. eine Vorrichtung zur Stilllegung eines Fahrzeugs gemäß dem Oberbegriff der Ansprüche oder 10.

Die DE 32 25 506 A1 offenbart ein solches Verfahren zur Stilllegung eines Fahrzeugs, bei welchem das Fahrzeug mittels eines von einem Sender ausgesandten Stilllegungssignals, welches von einem fahrzeugseitigen Empfänger empfangen wird, stillgelegt wird.

Die DE 195 08 369 C1 offenbart ein Verfahren zur Sicherung von Fahrzeugen vor unbefugter Nutzung, bei welchem ein Fahrzeug nach einer erkannten unbefugten Nutzung stillgelegt wird. Dies geschieht, indem die Inbetriebnahme des Fahrzeugs nach der nächsten Außerbetriebnahme des Fahrzeugs verhindert wird, oder indem der Fahrzeugbetrieb durch eine progressive Absenkung der Fahrleistungen bis zum Stillstand beendet wird.

Aus der DE 195 19 681 A1 ist ein Verfahren zum Stilllegen eines Fahrzeugs mittels eines Stilllegungssignal in Folge einer Stilllegungsaufforderung bekannt, bei der bei einer fahrzeugseitigen Auswertung, eines aktuellen Fahrzeugbetriebszustandes nach vorgegebenen Kriterien auf einen zulässigen Stilllegungsort geschlossen wird, wobei das Stilllegungssignal erst erzeugt wird, wenn der aktuelle Fahrzeugbetriebszustand einen zulässigen Stilllegungsort repräsentiert.

Aus der DE 195 38 694 A1 ist ein Verfahren zur Stilllegung eines Fahrzeugs bekannt, wobei der aktuelle Fahrzeugstandort mittels eines Navigationssystems ermittelt wird.

Die gattungsgemäße GB 2 305 285 A beschreibt ein Verfahren zur Stilllegung eines Fahrzeugs mittels eines Stilllegungssignals in Folge einer Stilllegungsaufforderung, wobei bei einer fahrzeugseitigen Auswertung eines aktuellen Fahrzeugbetriebszustandes nach vorgegebenen Kriterien auf einen verkehrssicheren Stilllegungsort geschlossen wird und wobei das Stilllegungssignal erst erzeugt wird, wenn der aktuelle Fahrzeugbetriebszustand einen verkehrssicheren Stilllegungsort repräsentiert. Ein verkehrssicherer Fahrzeugbetriebszustand wird dabei nur erkannt, wenn die Radgeschwindigkeit "Null" ist, oder wenn sich das Fahrzeug in einer definierten Sicherheitszone befindet.

Als nachteilig könnte bei den o. a. Dokumenten angesehen werden, daß keine Maßnahmen angegeben werden um eine verkehrssichere Stilllegung des Fahrzeugs sicherzustellen. Deshalb kann es unter ungünstigen Umständen, beispielsweise wenn die Stilllegung mitten auf einer Kreuzung oder auf einem Bahnübergang erfolgt, bei der Stilllegung des Fahrzeugs zu einer Gefährdung von unbeteiligten Dritten oder des potentiellen Diebes kommen.

Aufgabe der Erfindung ist es, ein Verfahren zur verkehrssicheren Stilllegung eines Fahrzeugs anzugeben, bei welchem nahezu jegliche Verkehrsgefährdung ausgeschlossen wird.

Diese Aufgabe wird erfindungsgemäß hinsichtlich der Verfahrensmerkmale nach Anspruch 1 und hinsichtlich der Vorrichtungsmerkmale nach Anspruch 10 gelöst, wobei die Merkmale der Unteransprüche vorteilhafte Ausgestaltungen und Weiterbildungen kennzeichnen.

Der Hauptgedanke der Erfindung beruht darauf, daß die verkehrssichere Stilllegung eines Fahrzeugs in zwei Phasen durchgeführt wird. In einer ersten Phase wird dabei eine unberechtigte Nutzung des Fahrzeugs erkannt und eine Stillegungsaufforderung generiert. Die Erkennung einer unberechtigten Nutzung ist aber nicht Gegenstand dieser Erfindung. Aus dem Stand der Technik sind verschiedene Verfahren zur sicheren Erkennung einer unberechtigten Nutzung eines Fahrzeugs bekannt. So kann eine unberechtigte Nutzung dem Fahrzeug durch eine externe Zentrale mittels einer Stilllegungsaufforderung, welche durch eine fahrzeugseitige Kommunikationseinrichtung empfangen wird, mitgeteilt werden. Als unberechtigte Nutzung kann dabei auch angesehen werden, wenn ein rechtmäßiger Benutzer an einer weiteren Nutzung des Fahrzeugs gehindert werden soll, beispielsweise bei einer Fahndung durch die Polizei, bei einer Fahrerflucht oder im Falle von nicht bezahlten Leasing- oder Finanzierungsraten oder Kraftfahrzeugsteuern bzw. Kraftfahrzeugversicherungbeiträgen. Eine unberechtigte Nutzung des Fahrzeugs kann aber auch durch eine Erkennungseinrichtung im Fahrzeug festgestellt werden, beispielsweise wenn, wie es auch in der DE 195 08 369 C1 beschrieben wird, vorgegebene Nutzungsbeschränkungen, wie eine maximal zurücklegbare Fahrstrecke, eine begrenzte Nutzungsdauer oder ein festgelegtes geographisches Gebiet, welches nicht verlassen werden darf, überschritten werden. Wird eine Überschreitung einer der vorgegebenen Nutzungsbeschränkungen erkannt, so wird ebenfalls eine Stilllegungsaufforderung erzeugt.

In einer zweiten Phase wird durch die Stilllegungsaufforderung eine fahrzeugseitige Auswertung aktiviert. Bei der fahrzeugseitigen Auswertung wird ein aktueller Fahrzeugbetriebszustand nach vorgegebenen Kriterien, mit welchen auf einen verkehrssicheren Stilllegungsort geschlossen werden kann, ausgewertet. Ein Stilllegungssignal wird erst dann erzeugt, wenn der aktuelle Fahrzeugbetriebszustand einen verkehrssicheren Stilllegungsort repräsentiert.

Als verkehrssichere Stilllegungsorte gelten alle aktuellen Standorte des Fahrzeugs, an welchen eine Stilllegung des Fahrzeugs ohne eine Gefährdung der Fahrzeuginsassen und/oder anderer Verkehrsteilnehmer durchgeführt werden kann, beispielsweise wenn sich das Fahrzeug an einer Tankstelle, auf einem Parkplatz, auf einem Seitenstreifen, an einer Grenzkontrollstelle oder an ähnlichen Standorten befindet. Als Kriterien zur Erkennung von solchen verkehrssicheren Stilllegungsorten werden Daten von fahrzeugseitig angeordneten Sensoren, welche den Fahrzeugbetriebszustand repräsentieren, ausgewertet. Wird bei der fahrzeugseitigen Auswertung erkannt, daß das Fahrzeug betankt wird oder, daß das Fahrzeug geparkt ist oder, daß das Fahrzeug transportiert bzw. abgeschleppt wird, dann kann aus diesen Fahrzeugbetriebszuständen geschlossen werden, daß der aktuelle Standort des Fahrzeugs einem verkehrsicheren Stilllegungsort entspricht und das Stilllegungssignal kann erzeugt werden.

In der zweiten Phase können zusätzlich zum aktuellen Fahrzeugbetriebszustand auch ein mit einem fahrzeugseitigen Navigationssystem ermittelter aktueller Fahrzeugstandort nach vorgegebenen Kriterien ausgewertet werden, wobei das Navigationssystem zur Ermittlung des aktuellen Fahrzeugstandortes beispielsweise ein GPS (Global Positioning System) verwendet. Die verkehrssicheren Stilllegungsorte können dann vorab, beispielsweise mittels ihrer Koordinaten gespeichert und bei der Auswertung mit dem aktuellen Fahrzeugstandort verglichen werden. Eine Speichereinheit enthält dann beispielsweise eine Liste von möglichen verkehrssicheren Stilllegungsorten (Tankstellen, Parkhäuser, Parkplätze, Grenzübergänge, usw.). Zusätzlich zur Auswertung, ob der aktuelle Fahrzeugstandort einem der vorab gespeicherten verkehrssicheren Stilllegungsorte entspricht, kann mit Hilfe des Navigationssystems der aktuelle Fahrzeugstandort durch einen Vergleich mit im Navigationssystem gespeicherten Straßenkarten dahingehend ausgewertet werden, ob der aktuelle Standort des Fahrzeugs neben der Fahrbahn, beispielsweise auf einem Seitenstreifen, in einer Garage oder an einem ähnlichen verkehrssicheren Stilllegungsort ist. Erst wenn der aktuelle Fahrzeugstandort mit einem der möglichen verkehrssicheren Stilllegungsorte übereinstimmt und wenn durch eine fahrzeugseitige Auswertung des Fahrzeugbetriebszustandes sichergestellt ist, daß das Fahrzeug sich nicht mehr bewegt bzw., daß das Fahrzeug transportiert oder abgeschleppt wird, dann wird das Stilllegungssignal erzeugt. Zur Feststellung, daß das Fahrzeug transportiert oder abgeschleppt wird, kann neben dem Fahrzeugbetriebszustand auch der mit dem Navigationssystem ermittelte aktuelle Fahrzeugstandort ausgewertet werden. Ergibt die Auswertung des Fahrzeugbetriebszustandes, daß der Motor nicht in Betrieb ist und ergibt die Auswertung des aktuellen Fahrzeugstandorts, daß sich das Fahrzeug bewegt, weil sich der aktuelle Fahrzeugstandort zwischen zwei Ortungsvorgängen verändert hat, so kann daraus geschlossen werden, daß das Fahrzeug transportiert oder abgeschleppt wird.

Zudem ist es vorstellbar, den mittels des fahrzeugseitigen Navigationssystems ermittelten aktuellen Fahrzeugstandort dahingehend auszuwerten, ob ein Ausschlußkriterium vorliegt, d. h. ob der aktuelle Fahrzeugstandort mit einem nicht verkehrssicheren Stilllegungsort übereinstimmt, an dem eine Stilllegung des Fahrzeugs verhindert werden sollte, beispielsweise wenn sich das Fahrzeug auf einer Kreuzung oder auf einem Bahnübergang befindet. Da das Navigationssystem bei der Ermittlung des aktuellen Standorts über eine gewisse Toleranz verfügt, sollte die Stilllegung des Fahrzeugs schon verhindert werden, wenn sich der aktuelle Fahrzeugstandort in der Nähe einer Kreuzung oder eines Bahnübergangs befindet.

Durch die zusätzliche Verwendung des Navigationssystems zur Auswertung, ob der aktuelle Fahrzeugstandort einem verkehrssicheren Stilllegungsort entspricht, läßt sich die Verkehrssicherheit bei der Stilllegung eines Fahrzeugs deutlich erhöhen insbesondere dann, wenn zusätzlich zur Auswertung, ob der aktuelle Fahrzeugbetriebszustand einen verkehrssicheren Stilllegungsort repräsentiert noch der aktuelle Fahrzeugstandort ausgewertet wird, wobei erkannt wird, ob der aktuelle Fahrzeugstandort einem nicht verkehrssicheren Stilllegungsort oder einem verkehrssicheren Stilllegungsort entspricht oder nicht.

Durch das erfindungsgemäße Verfahren werden in vorteilhafter Weise gefährliche Verkehrssituationen, wie sie beispielsweise auftreten können, wenn nach der Erkennung einer unbefugten Nutzung nur eine Wiederinbetriebnahme des Fahrzeugs nach der nächsten Außerbetriebnahme verhindert wird, vermieden. Befindet sich das Fahrzeug nach der nächsten Außerbetriebnahme, welche beispielsweise versehentlich aufgrund einer Fehlbedienung des unberechtigten Benutzers vorgenommen wurde, an einem nicht verkehrssicheren Ort, beispielsweise auf einem Bahnübergang oder auf einer Kreuzung, so kann dies zu gefährlichen Verkehrssituationen führen, weil das Fahrzeug nicht mehr ohne fremde Hilfe von dem nicht verkehrssicheren Stilllegungsort entfernt werden kann.

Bei einer besonders vorteilhaften Ausführung des erfindungsgemäßen Verfahrens werden zur Auswertung des aktuellen Fahrzeugbetriebszustandes Daten von bereits im Fahrzeug für andere Zwecke verwendeten Sensoreinrichtungen herangezogen. Zur Erkennung eines ersten Fahrzeugbetriebszustands 'Fahrzeug wird betankt' werden die Daten eines Füllstandsensors, welche den Füllstand im Kraftstoffbehälter repräsentieren, ausgewertet. Ergibt die Auswertung dieser Daten eine deutliche Zunahme des Füllstandes im Kraftstoffbehälter, beispielsweise wenn sich der Füllstand um 5 Liter oder um 5 Prozent bezüglich des Füllstandes vor der Zunahme erhöht, so wird der erste Fahrzeugbetriebszustand erkannt und darauf geschlossen, daß der aktuelle Fahrzeugstandort einem verkehrssicheren Stilllegungsort, beispielsweise einer Tankstelle, einem Standstreifen oder einem Parkplatz, entspricht und das Stilllegungssignal wird erzeugt. Die gleiche Vorgehensweise kann analog bezüglich des Ölstandes angewendet werden. Als besonderer Vorteil bei dieser Ausführung des erfindungsgemäßen Verfahrens ergibt sich, daß bereits im Fahrzeug vorhandene Füllstandsensoren zur Auswertung verwendet werden können. Eine andere Möglichkeit zur Feststellung des ersten Fahrzeugbetriebszustands besteht darin, einen Durchflußsensor am Tankeinfüllstutzen vorzusehen, mit dem festgestellt werden kann, ob ein Durchfluß durch den Tankeinfüllstutzen erfolgt oder nicht. Zusätzlich kann ein solcher Durchflußsensor auch am Öleinfüllstutzen vorgesehen werden. Zudem ist es vorstellbar, mittels eines Gassensors auszuwerten, ob der Anteil von Benzindämpfen in der Umgebungsluft des aktuellen Fahrzeugstandortes einen bestimmten Grenzwert überschreitet, woraus geschlossen werden kann, daß sich das Fahrzeug an einer Tankstelle befindet.

Zur Erkennung eines zweiten Fahrzeugbetriebszustandes 'Fahrzeug ist geparkt', wird eine Kombination von mehreren fahrzeugseitigen Sensordaten ausgewertet (Motor aus und/oder Zentralverriegelung bzw. Diebstahlerkennungseinrichtung verriegelt bzw. aktiviert und/oder Feststellbremse angezogen und/oder Automatikgetriebe in P-Stellung und/oder Sitz-belegt-Erkennung usw.), mittels derer festgestellt werden kann, ob der zweite Fahrzeugbetriebszustand vorliegt oder nicht. Wird bei der Auswertung des aktuellen Fahrzeugbetriebszustandes der zweite Fahrzeugbetriebszustand erkannt, so kann daraus geschlossen werden, daß der aktuelle Fahrzeugstandort einem verkehrssicheren Stilllegungsort, beispielsweise einem Parkplatz, einem Parkhaus, einem Straßenrand oder dem Seitenstreifen, entspricht und das Stilllegungssignal wird erzeugt.

Zur Erkennung eines dritten Fahrzeugbetriebszustandes 'Fahrzeug wird transportiert' wird eine Kombination von mehreren fahrzeugseitigen Sensordaten ausgewertet (Motor aus und/oder Fahrzeug wird bewegt usw.), mittels derer festgestellt werden kann, ob der dritte Fahrzeugbetriebszustand vorliegt oder nicht. Wird bei der Auswertung des aktuellen Fahrzeugbetriebszustandes der dritte Fahrzeugbetriebszustand erkannt, so kann daraus geschlossen werden, daß das Fahrzeug ohne eine Verkehrsgefährdung stillgelegt werden kann, d. h. ein Transport oder ein Abschleppen des Fahrzeugs wird als verkehrssicherer Stilllegungsort betrachtet, und das Stilllegungssignal wird erzeugt.

Zusätzlich zu den beschriebenen Maßnahmen können bei der Auswertung auch externe Übertragungssignale mit einem Stilllegungscode, welche beispielsweise mittels Induktionsschleifen an verkehrssicheren Stilllegungsorten wie Tankstellen, Grenzkontrollstellen oder Zahlstellen ausgesendet werden, berücksichtigt werden, wobei diese Übertragungssignale nicht an bestimmte Fahrzeuge adressiert sind. Durch den Stilllegungscode sind nur solche Fahrzeuge betroffen, bei welchen eine unberechtigte Nutzung erkannt wurde und bei welchen eine Stilllegungsaufforderung vorliegt. Auf Fahrzeuge, bei welchen keine Stilllegungsaufforderung vorliegt, haben die Übertragungssignale keine Auswirkung.

Zusätzlich können Maßnahmen vorgesehen werden, welche einen vermeintlichen Fahrzeugdieb zum Aufsuchen eines verkehrssicheren Stilllegungsortes bewegen. So können Anzeigeeinrichtungen' für Fahrzeugbetriebszustände, welche Teil eines Kombinationsinstruments sind, manipuliert werden, wenn eine unberechtigte Nutzung erkannt wurde und eine Stilllegungsaufforderung vorliegt. Die Manipulation kann beispielsweise an einer Kraftstofffüllstandsanzeige durchgeführt werden, indem unabhängig vom Kraftstofffüllstand die Kraftstofffüllstandsanzeige so angesteuert wird, als ob sich der Füllstand des Kraftstoffbehälters im Reservebereich befindet. Zudem kann eine eventuell vorhandene Reserve-Warneinrichtung aktiviert werden. Analog besteht die Möglichkeit, eine Ölstandsanzeige zu manipulieren. Durch diese Maßnahmen wird ein vermeintlicher Fahrzeugdieb dazu veranlaßt, das Fahrzeug zu betanken oder Öl nachzufüllen, indem er das Fahrzeug an einem verkehrssicheren Stilllegungsort, beispielsweise an einer Tankstelle zum Stillstand bringt. Ein solcher verkehrssicherer Stilllegungsort wird dann mittels der beschriebenen fahrzeugseitigen Auswertung erkannt und das Stilllegungssignal wird erzeugt.

Bei einer weiteren vorteilhaften Ausgestaltung können, wenn bei der fahrzeugseitigen Auswertung kein verkehrssicherer Stilllegungsort oder wenn ein nicht verkehrssicherer Stilllegungsort erkannt wurde, Maßnahmen vorgesehen werden, welche auf die Motorleistung des Fahrzeugs Einfluß nehmen. So kann beispielsweise die Motorleistung nach einer Stilllegungsaufforderung durch einen Eingriff auf die Motorelektronik stufenweise oder kontinuierlich bis zu einem Notbetrieb reduziert werden. Im Zusammenhang mit der bereits beschriebene Maßnahme, die Anzeigeeinrichtungen des Fahrzeugs zu manipulieren, kann dies den vermeintlichen Dieb zusätzlich veranlassen, einen verkehrssicheren Stilllegungsort wie beispielsweise eine Werkstatt oder eine Tankstelle aufzusuchen. Durch die fahrzeugseitige Auswertung wird dieser verkehrssichere Stilllegungsort erkannt und das Stilllegungssignal wird erzeugt. Die Reduzierung der verfügbaren Motorleistung erfolgt beispielsweise stufenweise bei jedem Stillstand des Fahrzeugs, welcher durch die Auswertung des aktuellen Fahrzeugbetriebszustandes erkannt wird, an einem bei der fahrzeugseitigen Auswertung nicht als verkehrssicher erkannten Stilllegungsort, wie an einer roten Ampel oder an ähnlichen Orten, oder kontinuierlich während der Fahrt unter Berücksichtigung von weiteren Kriterien, wobei besonders berücksichtigt werden muß, daß kein Überholvorgang vorliegt, indem beispielsweise durch Auswertung des aktuellen Fahrzeugbetriebszustandes überprüft wird, ob das Fahrzeug gerade beschleunigt.

Die Reduzierung der verfügbaren Motorleistung während der Fahrt bietet sich insbesondere bei Fahrzeugen an, welche nur innerhalb eines vorgegebenen geographischen Gebiets betrieben werden dürfen und die außerhalb des vorgegebenen geographischen Gebiets stillgelegt werden sollen. Zu diesem Zweck wird bei einer Überschreitung der vorgegebenen Gebietsgrenze die verfügbare Motorleistung kontinuierlich bis zu einem Notbetrieb reduziert. Nach Erreichen des Notbetriebs wird, wenn bei der fahrzeugseitigen Auswertung ein verkehrssicherer Stilllegungsort erkannt wird, das Stilllegungssignal erzeugt. Dadurch wird sichergestellt, daß das Fahrzeug nur bis zu einer festgelegten Toleranzgrenze außerhalb des vorgegebenen geographischen Gebiets benutzt werden kann. Überschreitet ein Benutzer des Fahrzeugs irrtümlicherweise die vorgegebene Gebietsgrenze, so kann er umdrehen und wieder in das vorgegebene geographische Gebiet einfahren. Bei Annäherung an die Gebietsgrenze wird dann die verfügbare Motorleistung wieder kontinuierlich erhöht bis an der Gebietsgrenze die maximal erreichbare Motorleistung wieder zur Verfügung steht. Zur Information an den Fahrer kann eine entsprechende Meldung optisch oder akustisch, beispielsweise als Sprachausgabe, ausgegeben werden, welche ihn über das Einsetzten der Motorleistungsreduktion bzw. über die Motorleistungserhöhung entsprechend informieren. Zusätzlich kann in bestimmten Bereichen, in denen ein Umdrehen nicht möglich ist, beispielsweise auf Autobahnen, der Toleranzbereich, in dem die Motorleistung reduziert wird, vergrößert werden, damit ein Fahrer, welcher irrtümlich das vorgegebene geographische Gebiet verläßt, die nächste Wendemöglichkeit, beispielsweise eine Ausfahrt, erreichen kann.

Die Erfindung ist im Folgenden anhand von Ausführungsbeispielen in Verbindung mit den Zeichnungen näher erläutert. Es zeigen:
- Fig. 1: Ablaufdiagramm einer Ausführung des erfindungsgemäßen Verfahrens
- Fig. 2: Blockschaltbild einer Vorrichtung zur Durchführung des erfindungsgemäßen Verfahrens

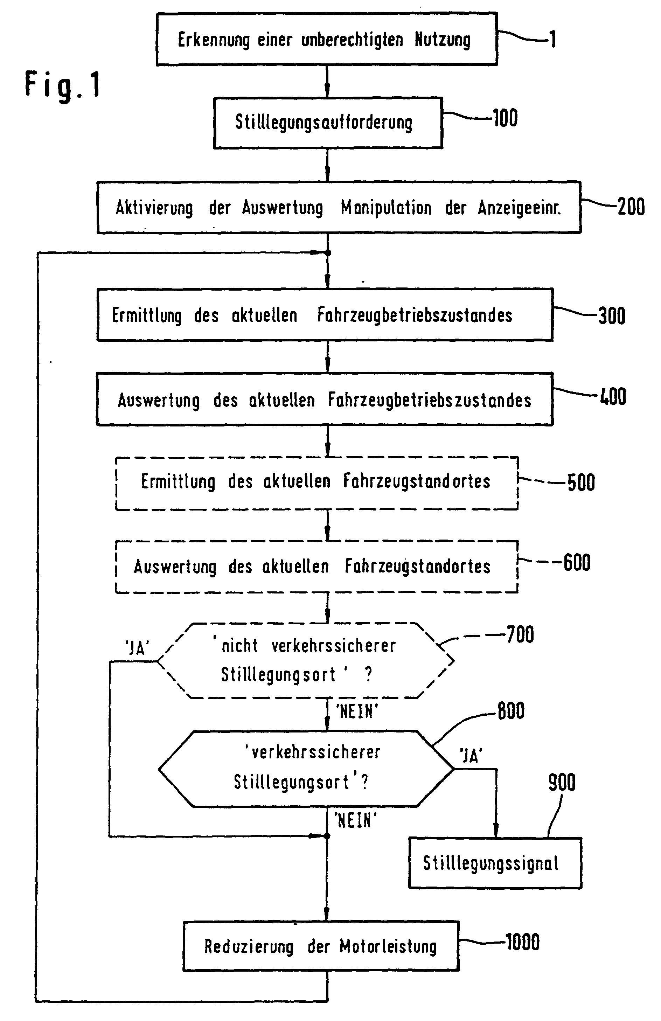

Wie aus der Fig. 1 ersichtlich ist, wird nach dem Erkennen einer unberechtigten Fahrzeugnutzung im Verfahrensschritt 1, welche nicht Gegenstand dieser Erfindung ist, im Verfahrensschritt 100 eine Stilllegungsaufforderung erzeugt, welche im Verfahrensschritt 200 eine fahrzeugseitige Auswertung aktiviert. Zusätzlich wird im Verfahrensschritt 200 eine Anzeigeeinrichtung, welche beispielsweise eine Anzeige zur Darstellung des Kraftstofffüllstandes und/oder des Ölfüllstandes bzw. des Öldruckes umfaßt, dahingehend manipuliert, daß ein unberechtigter Benutzer des Fahrzeugs dazu veranlaßt wird, das Fahrzeug zu betanken bzw. Öl nachzufüllen. Im Schritt 300 wird der aktuelle Fahrzeugbetriebszustand aus Daten von fahrzeugseitigen Sensoreinrichtungen ermittelt. Im Schritt 400 wird der aktuelle Fahrzeugbetriebszustand nach vorgegebenen Kriterien, aus welchen auf einen verkehrssicheren Stilllegungsort geschlossen werden kann, ausgewertet. So wird beispielsweise überprüft, ob der aktuelle Fahrzeugbetriebszustand einem der Fahrzeugbetriebszustände 'Fahrzeug wird betankt', 'Fahrzeug ist geparkt' oder 'Fahrzeug wird transportiert' entspricht oder nicht. Im Verfahrensschritt 500 wird der aktuelle Fahrzeugstandort aus den Daten eines Navigationssystems, welches zu diesem Zweck ein GPS (Global Positioning System) oder ein anderes Ortungssystem umfaßt, ermittelt. Im Verfahrensschritt 600 wird der aktuelle Fahrzeugstandort nach vorgegebenen Kriterien ausgewertet. So wird beispielsweise überprüft, ob der aktuelle Fahrzeugstandort mit einem vorgegebenen verkehrssicheren Stilllegungsort übereinstimmt, oder ob sich das Fahrzeug neben der Fahrbahn, beispielsweise auf einem Seitenstreifen oder einem ähnlichen Standort befindet wobei zur Überprüfung der aktuelle Fahrzeugstandort mit im Navigationssystem vorhandenen Straßenkarten verglichen wird. Zusätzlich wird im Verfahrensschritt 600 ausgewertet, ob der aktuelle Fahrzeugstandort mit einem nicht verkehrssicheren Stilllegungsort übereinstimmt, wobei durch einen Vergleich des aktuellen Fahrzeugstandorts mit im Navigationssystem vorhandenen Straßenkarten überprüft wird, ob der aktuelle Fahrzeugstandort einem nicht verkehrssicheren Stilllegungsort, wie beispielsweise einer Kreuzung oder einem Bahnübergang, entspricht. Durch die Abfrage 700 wird festgestellt, ob ein nicht verkehrssicherer Stilllegungsort erkannt wurde. Wird die Abfrage 700 mit 'ja' beantwortet, so wird zum Verfahrensschritt 1000 verzweigt. Wird die Abfrage 700 mit 'nein' beantwortet, so wird zur Abfrage 800 verzweigt. Durch die Abfrage 800 wird überprüft, ob ein verkehrssicherer Stilllegungsort erkannt wurde oder nicht. Wird die Abfrage 800 mit 'nein' beantwortet, so wird zum Schritt 1000 verzweigt. Wird die Abfrage 800 mit 'ja' beantwortet, so wird im Verfahrensschritt 900 ein Stilllegungssignal zur Aktivierung einer Wegfahrsperre erzeugt und das Verfahren wird beendet, wobei die so aktivierte Wegfahrsperre nur durch eine autorisierte Stelle wieder deaktiviert werden kann. Im Schritt 1000 wird ein Verfahren zur Reduzierung der Motorleistung aktiviert und anschließend zum Schritt 300 verzweigt. Die Verfahrensschritte 500 bis 700 sind gestrichelt dargestellt, weil zu ihrer Durchführung ein fahrzeugseitiges Navigationssystem notwendig ist. Zur Durchführung einer Ausführungsform des erfindungsgemäßen Verfahrens ist ein fahrzeugseitiges Navigationssystem jedoch nicht erforderlich. Bei einem vorhandenen Navigationssystem erhöht sich jedoch die Erkennungssicherheit eines verkehrsicheren Stilllegungsortes, weil ein durch die Auswertung des aktuellen Fahrzeugbetriebszustandes erkannter verkehrssicherer Stilllegungsort nochmals überprüft werden kann. Zudem kann durch die zusätzliche Auswertung des aktuellen Fahrzeugstandorts die Erkennung des dritten Fahrzeugbetriebszustandes 'Fahrzeug wird transportiert' verbessert werden, indem zusätzlich zur Auswertung der Daten einer Sensoreinrichtung zwei Ortungsvorgänge hintereinander ausgeführt werden. Ergibt die Auswertung der Ortungsvorgänge, daß sich der aktuelle Fahrzeugstandort verändert und die Auswertung der Daten der Sensoreinrichtung, daß der Motor nicht in Betrieb ist, so wird der dritte Fahrzeugbetriebszustand erkannt.

Desweiteren können mit Hilfe des fahrzeugseitigen Ortungs- und/oder Navigationssystems noch weitere sichere Stilllegungsorte, wie beispielsweise Grenzkontrollstellen, Zahlstellen, usw., welche nicht durch die Auswertung des aktuellen Fahrzeugbetriebszustandes erkannt werden können, erkannt werden. Prinzipiell können somit alle möglichen verkehrsicheren Stilllegungsorte, welche nicht einem Verkehrsweg entsprechen, im Rahmen der Toleranz des verwendeten Navigationssystems erkannt werden.

Zur Erkennung des ersten Fahrzeugbetriebszustandes 'Fahrzeug wird betankt' im Verfahrensschritt 400, werden in vorteilhafter Weise die Daten eines bereits im Fahrzeug vorhandenen Kraftstofffüllstandssensors ausgewertet. Ergibt die Auswertung, daß der Füllstand des Kraftstoffbehälter um einen bestimmten prozentuellen Wert, beispielsweise um 5 Prozent, bezogen auf den Füllstand vor der Zunahme oder um einen bestimmten Absolutwert, beispielsweise 5 Liter, zunimmt, so wird die Feststellung getroffen, daß das Fahrzeug betankt wird.

Zur Erkennung des zweiten Fahrzeugbetriebszustandes 'Fahrzeug ist geparkt' im Verfahrensschritt 400 werden in vorteilhafter Weise die Daten von bereits im Fahrzeug vorhandenen Sensoreinrichtungen ausgewertet. So wird zur Feststellung, ob der Motor in Betrieb ist oder nicht, die Daten eines entsprechenden Motorsensors ausgewertet, zusätzlich wird durch Auswertung der Daten von Raddrehzahlsensoren ausgewertet, ob sich das Fahrzeug bewegt oder nicht. Zudem können die Daten von anderen Sensoren, beispielsweise von Sitzsensoren zur Erkennung, ob ein Fahrzeugsitz belegt ist oder nicht, Türkontakten zur Erkennung, ob eine Tür geöffnet und wieder geschlossen wurde, Zündschloßsensor zur Erkennung, ob ein Schlüssel im Zündschloß steckt oder nicht, Verriegelungssensoren zur Erkennung, ob das Fahrzeug verriegelt ist oder nicht, Feststellbremsensensor zur Erkennung ob die Feststellbremse angezogen ist oder nicht, Wählhebelsensor zur Erkennung, ob der Wählhebel bei einem Automatikgetriebe in der Stellung P ist oder nicht, ausgewertet werden, um die Feststellung zu treffen, daß das Fahrzeug geparkt ist und somit ein verkehrssicherer Stilllegungsort gegeben ist. Vorzugsweise findet im Verfahrensschritt 400 eine logische UND-Verknüpfung der Signale des Motorsensors (Motor aus), der Raddrehzahlsensoren (Räder drehen sich nicht), des Zündschloßsensors (Schlüssel steckt nicht) und der Verriegelungssensoren (Fahrzeug ist verriegelt) statt. Sind alle Bedingungen wahr, so wird der zweite Fahrzeugbetriebszustand 'Fahrzeug ist geparkt' erkannt. Natürlich können auch andere logische Kombinationen aus den genannten Sensorsignalen gebildet werden, solange sichergestellt ist, daß durch die Kombination der zweite Fahrzeugbetriebszustand erkannt wird. Zusätzlich kann nach dem Abschalten des Motors, bzw. nach dem Abziehen des Zündschlüssels aus dem Zündschloß ein Zeitfenster, welches zwischen ca. 5 und 10 Minuten lang ist, zur Erkennung des Fahrzeugbetriebszustandes 'Fahrzeug ist geparkt' gestartet werden. Wird nun innerhalb des Zeitfensters keine Veränderung des Fahrzeugbetriebszustandes, beispielsweise ein Motorstartversuch oder ähnliches, durch Auswerten der Daten der Sensoreinrichtungen festgestellt, so wird nach Ablauf dieses Zeitfensters der Fahrzeugbetriebszustand 'Fahrzeug ist geparkt' erkannt.

Zur Erkennung des dritten Fahrzeugbetriebszustandes 'Fahrzeug wird transportiert' im Verfahrensschritt 400 werden ebenfalls in vorteilhafter Weise die Daten von bereits im Fahrzeug vorhandenen Sensoreinrichtungen ausgewertet. So werden zur Feststellung. ob der Motor in Betrieb ist oder nicht, die Daten des entsprechenden Motorsensors ausgewertet, zusätzlich wird durch Auswertung der Daten der Raddrehzahlsensoren ausgewertet, ob sich das Fahrzeug bewegt oder nicht. Zusätzlich werden die Daten von Neigungssensoren und/oder Drehratensensoren ausgewertet. Durch die Auswertung der Daten der Neigungssensoren und/oder Drehratensensoren läßt sich feststellen, ob die Lage des Fahrzeugs verändert wurde. Dies ist beim Aufladen auf einen Transporter oder beim Abschleppen normalerweise der Fall.

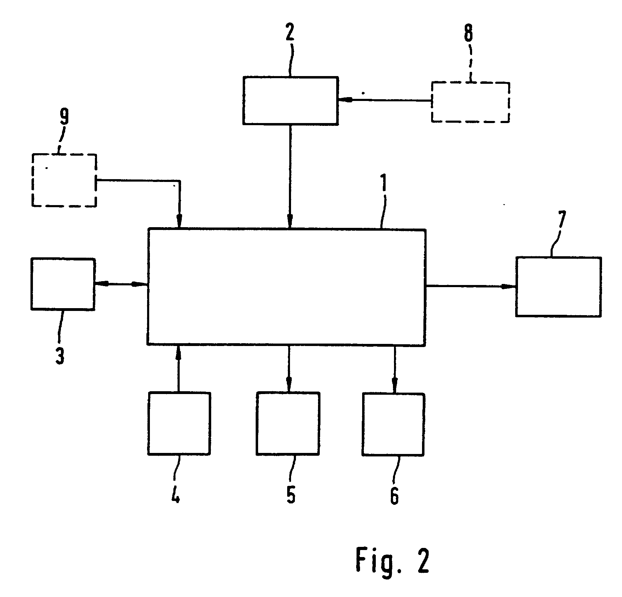

Wie aus Fig. 2 ersichtlich ist, umfaßt eine Ausführungsform einer Vorrichtung zur Durchführung der erfindungsgemäßen Verfahren eine Auswerteeinrichtung 1, wobei die Auswerteeinrichtung 1 mit einer Erkennungseinrichtung 2 zur Erkennung einer unberechtigten Nutzung verbunden ist, wobei die Erkennungseinrichtung 2 nach einer erkannten unberechtigten Nutzung eine Stilllegungsaufforderung erzeugt, wodurch die Auswertung in der Auswerteeinrichtung 1 aktiviert wird. Desweiteren ist die Auswerteeinrichtung 1 mit einem Navigationssystem 3, welches ein Ortungssytem zur Feststellung des aktuellen Fahrzeugstandortes umfaßt, und einer Sensoreinrichtung 4, welche alle notwendigen Sensoren zur Ermittlung des Fahrzeugbetriebszustandes umfaßt, verbunden. Zusätzlich ist die Auswerteeinrichtung 1 mit einer Wegfahrsperre 5 zur Stilllegung des Fahrzeugs, einer Motorelektronik 6 zur Motorsteuerung, welche bei Bedarf zur Reduzierung der verfügbaren Motorleistung von der Auswerteeinrichtung 1 beeinflußt werden kann und einer Anzeigeeinrichtung 7 zur Anzeige von betriebsrelevanten Parametern, welche durch die Auswerteeinrichtung 1 bei Bedarf manipuliert werden kann, verbunden. Außerdem können die gestrichelt dargestellten Einrichtungen wie eine Kommunikationseinrichtung 8, welche zum Empfang einer Stilllegungsaufforderung von einer externen Zentrale ausgebildet ist, wobei die Stilllegungsaufforderung über ein Pager-System, das GSM-Netz oder mittels Satellitenfunk an die Kommunikationseinrichtung 8 übertragen wird, und/oder eine Empfangseinrichtung 9 vorgesehen sein, wobei die Empfangseinrichtung 9 zum Empfang von einem externen Übertragungssignal ausgebildet ist, welches beispielsweise von einer Induktionsschleife ausgesendet wird und welches einen verkehrssicheren Stilllegungsort repräsentiert. Die Verbindungen zwischen den einzelnen Komponenten der Vorrichtung zur verkehrsicheren Stilllegung eines Fahrzeugs sind vorzugsweise als ein optisches oder elektronisches Datenbussystem ausgeführt.

Den Kern der Vorrichtung zur Durchführung der erfindungsgemäßen Verfahren wird durch die Auswerteeinrichtung 1 gebildet, welche beispielsweise als Mikroprozessor mit zugehörigen Speichereinrichtungen ausgeführt sein kann. Nach einer erfolgten Stilllegungsaufforderung durch die Erkennungseinrichtung 2 wird von der Auswerteeinrichtung 1 die Kraftstofffüllstandsanzeige, welche Teil der Anzeigeeinrichtung 7 ist, so manipuliert, daß dem unberechtigten Benutzer vermittelt wird, daß der Füllstand im Kraftstoffbehälter den Reservebereich erreicht hat. Zusätzlich kann die Ölstandsanzeige so manipuliert werden, daß der unberechtigte Benutzer den Eindruck erhält, daß der Ölstand zu niedrig ist und Öl nachgefüllt werden muß. Anschließend wird aus den Daten der Sensoreinrichtung 4 der aktuelle Fahrzeugbetriebszustand ermittelt und ausgewertet. Danach wird mittels des Navigationssystems 3 der aktuelle Fahrzeugstandort ermittelt und ausgewertet. Erkennt die Auswerteeinrichtung 1, daß der aktuelle Fahrzeugstandort mit einem verkehrssicheren Stilllegungsort übereinstimmt, so erzeugt die Auswerteeinrichtung 1 das Stilllegungssignal zur Aktivierung der Wegfahrsperre 5. Erkennt die Auswerteinrichtung 1 keinen verkehrssicheren Stilllegungsort oder wird ein nicht verkehrssicherer Stilllegungsort erkannt, so beeinflußt die Auswerteeinrichtung 1 die Motorelektronik 6 zur Reduzierung der Motorleistung. Zudem ist es vorstellbar, daß die Auswerteeinrichtung 1 nicht nur nach einer Stilllegungsaufforderung aktiv wird, sondern daß die Ermittlung des aktuellen Fahrzeugbetriebszustandes und des aktuellen Fahrzeugstandortes ständig durchgeführt wird und die Ergebnisse in entsprechenden Speichereinrichtungen, welche Teil der Auswerteeinrichtung 1 sein können, gespeichert werden, so daß nach einer Stilllegungsaufforderung die Auswerteeinrichtung 1 sofort mit der Auswertung beginnen kann.

Verfügt das Fahrzeug über ein System zur Nutzungsbeschränkung, insbesondere über ein System zur geographischen Nutzungsbeschränkung, d. h. das Fahrzeug darf nur innerhalb eines vorgegebenen geographischen Gebiets benutzt werden, so führt die Auswerteeinrichtung 1 eine besondere Art der Stilllegung durch. Überfährt das Fahrzeug eine vorgegebene Gebietsgrenze, so wird innerhalb eines vorgegebenen zusätzlichen Toleranzgebiets die verfügbare Motorleistung durch einen Eingriff auf die Motorelektronik 6 kontinuierlich bis zu einem Notbetrieb reduziert und anschließend, wenn ein verkehrssicherer Stilllegungsort erkannt wird, wird das Fahrzeug wie bereits beschrieben stillgelegt. Nähert sich das Fahrzeug innerhalb des vorgegebenen zusätzlichen Toleranzgebietes und demnach noch vor dem Stilllegen wieder der vorgegebenen Gebietsgrenze, so wird die verfügbare Motorleistung durch eine Eingriff auf die Motorelektronik 6 wieder kontinuierlich bis zu ihrem Maximalwert erhöht, wobei der Maximalwert beim Einfahren in das vorgegebene geographische Gebiet erreicht wird.

## Patentansprüche

1. Verfahren zur Stilllegung eines Fahrzeugs mittels eines Stilllegungssignals in Folge einer Stilllegungsaufforderung, wobei bei einer fahrzeugseitigen Auswertung eines aktuellen Fahrzeugbetriebszustandes nach vorgegebenen Kriterien auf einen verkehrssicheren Stilllegungsort geschlossen wird, wobei das Stilllegungssignal erst erzeugt wird, wenn der aktuelle Fahrzeugbetriebszustand einen verkehrssicheren Stilllegungsort repräsentiert
**dadurch gekennzeichnet,**
**dass** ein erster Fahrzeugbetriebszustand erkannt wird, wenn das Fahrzeug betankt und/oder wenn Öl nachgefüllt wird, ein zweiter Fahrzeugbetriebszustand erkannt wird, wenn das Fahrzeug geparkt ist, ein dritter Fahrzeugbetriebszustand erkannt wird, wenn das Fahrzeug transportiert oder abgeschleppt wird.

2. Verfahren zur Stilllegung eines Fahrzeugs nach Anspruch 1,
**dadurch gekennzeichnet,**
**dass** bei einer fahrzeugseitigen Auswertung eines von einem fahrzeugseitigen Navigationssystems ermittelten aktuellen Fahrzeugstandorts nach vorgegebenen Kriterien, der aktuelle Fahrzeugstandort als verkehrssicherer Stilllegungsort oder als nicht verkehrssicherer Stilllegungsort erkannt wird, wobei das Stilllegungssignal dann erzeugt wird, wenn der aktuelle Fahrzeugstandort einem verkehrssicheren Stilllegungsort entspricht, und wobei die Erzeugung des Stilllegungssignals verhindert wird, wenn der aktuelle Fahrzeugstandort einem nicht verkehrssicheren Stilllegungsort entspricht.

3. Verfahren zur Stilllegung nach Anspruch 1,
**dadurch gekennzeichnet,**
**dass** der erste Fahrzeugbetriebszustand bei der fahrzeugseitigen Auswertung von Daten eines Kraftstofffüllstandssensors und/oder eines Ölfüllstandssensors erkannt wird.

4. Verfahren zur Stilllegung nach Anspruch 1,
**dadurch gekennzeichnet,**
**dass** der erste Fahrzeugbetriebszustand bei der fahrzeugseitigen Auswertung von Daten eines Durchflusssensors erkannt wird, wobei der Durchflusssensor einen Durchfluss im Tankeinfüllstutzen repräsentiert.

5. Verfahren zur Stilllegung nach Anspruch 1 oder 2,
**dadurch gekennzeichnet,**
**dass** zusätzlich zur fahrzeugseitigen Auswertung des Fahrzeugbetriebszustandes und/oder des von einem fahrzeugseitigen Navigationssystems ermittelten aktuellen Fahrzeugstandorts, außerhalb des Fahrzeugs erzeugte Übertragungssignale ausgewertet werden, wobei die Übertragungssignale durch eine fahrzeugseitige Einrichtung empfangen werden.

6. Verfahren zur Stilllegung nach Anspruch 5,
**dadurch gekennzeichnet,**
**dass** die Übertragungssignale durch Induktionsschleifen an das Fahrzeug übertragen werden, wobei die Induktionsschleifen an verkehrssicheren Stilllegungsorten angeordnet sind.

7. Verfahren zur Stilllegung nach Anspruch 2,
**dadurch gekennzeichnet,**
**dass** ein erster nicht verkehrssicherer Stilllegungsort erkannt wird, wenn sich das Fahrzeug auf einer Kreuzung oder Einmündung befindet und dass ein zweiter nicht verkehrssicherer Stilllegungsort erkannt wird, wenn sich das Fahrzeug auf einem Bahnübergang befindet.

8. Verfahren zur Stilllegung nach Anspruch 1 oder 2,
**dadurch gekennzeichnet,**
**dass**, wenn durch die fahrzeugseitige Auswertung kein verkehrssicherer Stilllegungsort oder ein nicht verkehrssicherer Stilllegungsort erkannt wurde, eine verfügbare Motorleistung kontinuierlich oder in festgelegten Stufen durch einen Eingriff auf eine Motorelektronik reduziert wird.

9. Verfahren zur Stilllegung nach Anspruch 1 oder 2,
**dadurch gekennzeichnet,**
**dass** bei einer geographischen Nutzungsbeschränkung nach dem Überfahren der vorgegebenen Gebietsgrenze mittels der fahrzeugseitigen Auswertung die Entfernung des aktuellen Fahrzeugstandortes von der vorgegebenen Gebietsgrenze ausgewertet wird und in Abhängigkeit von der Entfernung des aktuellen Fahrzeugstandortes von der vorgegebenen Gebietsgrenze die verfügbare Motorleistung mittels eines Eingriffs auf die Motorelektronik manipuliert wird, wobei die verfügbare Motorleistung beim Entfernen von der vorgegebenen Gebietsgrenze kontinuierlich oder in festgelegten Stufen reduziert und beim Annähern an die vorgegebene Gebietsgrenze kontinuierlich oder in festgelegten Stufen wieder erhöht wird.

10. Vorrichtung zur Stilllegung eines Fahrzeugs mittels eines Stilllegungssignals an einem Stilllegungsort nach einer erfolgten Stilllegungsaufforderung,
**dadurch gekennzeichnet,**
**dass** fahrzeugseitig eine Erkennungseinrichtung (2) zur Feststellung einer unberechtigten Nutzung, eine Auswerteeinrichtung (1) und eine Sensoreinrichtung (4) mit mehreren Sensoren vorgesehen sind, wobei die Erkennungseinrichtung (2) die Auswerteeinrichtung (1) mittels der Stilllegungsaufforderung aktiviert, wobei die Auswerteeinrichtung (1) Daten der Sensoreinrichtung (4) dahingehend auswertet, ob der aktuelle Fahrzeugbetriebszustand einen verkehrssicheren Stilllegungsort repräsentiert, der dadurch charakterisiert wird, ob das Fahrzeug betankt und/oder Öl nachgefüllt wird, ob das Fahrzeug geparkt ist, oder ob das Fahrzeug transportiert oder abgeschleppt wird, und wobei die Auswerteeinrichtung (1) das Stilllegungssignal zum Aktivieren einer Wegfahrsperre (5) erst erzeugt, wenn der aktuelle Fahrzeugbetriebszustand einen verkehrssicheren Stilllegungsort repräsentiert.

11. Vorrichtung zur Stilllegung eines Fahrzeugs nach Anspruch 10,
**dadurch gekenzeichnet,**
dass fahrzeugseitig ein Navigationssystem (3) vorgesehen ist, wobei die Erkennungseinrichtung (2) die Auswerteeinrichtung (1) mittels der Stilllegungsaufforderung aktiviert, wobei die Auswerteeinrichtung (1) einen vom Navigationssystem (3) ermittelten aktuellen Fahrzeugstandort dahingehend auswertet, ob der aktuelle Fahrzeugstandort einem verkehrssicheren Stilllegungsort oder einem nicht verkehrssicheren Stilllegungsort entspricht, und wobei die Auswerteeinrichtung (1) das Stilllegungssignal zum Aktivieren einer Wegfahrsperre (5) nur erzeugt, wenn der aktuelle Fahrzeugstandort mit einem verkehrssicheren Stilllegungsort übereinstimmt.

12. Vorrichtung nach Anspruch 10 oder 11,
**dadurch gekennzeichnet,**
**dass** fahrzeugseitig eine Anzeigeeinrichtung (7) vorgesehen ist, welche in Folge der Stilllegungsaufforderung durch die Auswerteeinrichtung (1) manipuliert wird.

13. Vorrichtung nach Anspruch 10 oder 11,
**dadurch gekennzeichnet,**
**dass** wenn die Auswerteeinrichtung (1) keinen verkehrssicheren Stilllegungsort erkennt, die Auswerteeinrichtung (1) über die Motorelektronik (6) die Leistung des Motors kontinuierlich oder stufenweise reduziert.

## Claims

1. Method of immobilising a vehicle by means of an immobilisation signal prompted by an immobilisation command, whereby an on-board evaluation of a current vehicle operating status is run on the basis of predetermined criteria to ascertain whether the vehicle is in a location in which it can be safely immobilised, the immobilisation signal not being generated unless the current vehicle operating status represents a location in which immobilisation is safe,
**characterised in that**
a first vehicle operating status is detected when the vehicle is being filled with fuel and/or if the oil is being topped up, a second vehicle operating status is detected if the vehicle is being parked, a third vehicle operating status is detected if the vehicle is being transported or towed away.

2. Immobilisation method as claimed in claim 1,
**characterised in that**
on the basis of an on-board evaluation of a current vehicle location determined by an on-board navigation system according to predetermined criteria, the current vehicle location is detected as being one in which the vehicle can be safely immobilised or one in which it can not be safely immobilised, the immobilisation signal not being generated unless the current vehicle location corresponds to a location in which immobilisation is safe, and transmission of the immobilisation signal being prevented if the current vehicle location does not correspond to a position in which immobilisation is safe.

3. Immobilisation method as claimed in claim 1,
**characterised in that**
the first vehicle operating status during an on-board evaluation is detected from data of a fuel level sensor and/or an oil level sensor.

4. Immobilisation method as claimed in claim 1,
**characterised in that**
the first vehicle operating status during an on-board evaluation is detected from data of a flow sensor, the flow sensor representing a flow in the tank filler neck.

5. Immobilisation system as claimed in claim 1 or 2,
**characterised in that**
in addition to on-board evaluation of the vehicle operating status and/or the current vehicle location detected by an on-board navigation system, transmission signals generated externally to the vehicle are evaluated, the transmission signals being received by means of an on-board system.

6. Immobilisation method as claimed in claim 5,
**characterised in that**
the transmission signals are transmitted to the vehicle by induction loops, the induction loops being disposed at locations where it is safe to immobilise the vehicle.

7. Immobilisation method as claimed in claim 2,
**characterised in that**
a first location detected as being a place at which immobilisation is not safe is one in which the vehicle is located at a cross-roads or junction and a second location detected as being a place at which immobilisation is not safe is one in which the vehicle is located on a railway crossing.

8. Immobilisation method as claimed in claim 1 or 2,
**characterised in that**
if the on-board evaluation does not detect a location at which immobilisation is safe or detects a location at which immobilisation is not safe, an available engine power is reduced continuously or in set stages by acting on an engine management system.

9. Immobilisation method as claimed in claim 1 or 2,
**characterised in that**
if a geographical restriction is placed on use, when the pre-set area boundary is found to have been exceeded by the on-board evaluation, the distance of the current vehicle location from the pre-set area boundary is evaluated and the available engine output is manipulated depending on the distance of the current vehicle location from the pre-set area boundary by acting on the engine management system, so that the available engine output is reduced continuously or in set stages as the distance from the pre-set area boundary increases and is increased again continuously or in set stages on drawing closer to the pre-set area boundary.

10. System for immobilising a vehicle by means of an immobilisation signal at an immobilisation location in response to an immobilisation command,
**characterised in that**
a detection system (2) for detecting unauthorised use, an evaluation unit (1) and a sensor system (4) comprising a plurality of sensors are provided on board, and the detection system (2) activates the evaluation unit (1) by means of the immobilisation command so that the evaluation unit (1) evaluates data from the sensor system (4) on a continuous basis to ascertain whether the current vehicle operating status represents a location at which immobilisation is safe, this being characterised on the basis of whether the fuel tank of the vehicle is being filled and/or the oil topped up, or whether the vehicle is being parked or whether the vehicle is being transported or towed away, and the evaluation system (1) does not generate the immobilisation signal for activating a driving lock (5) unless the current vehicle operating status represents a location at which immobilisation is safe.

11. System for immobilising a vehicle as claimed in claim 10,
**characterised in that**
an on-board navigation system (3) is provided and the detection system (2) activates the evaluation unit (1) in response to the immobilisation command so that the evaluation unit (1) continuously evaluates a current vehicle location detected by the navigation system (3) to ascertain whether the current vehicle location corresponds to a location at which immobilisation is safe or a location at which immobilisation is not safe, and the evaluation unit (1) does not generate the immobilisation signal to activate a driving lock (5) unless the current vehicle location matches a location at which immobilisation is safe.

12. System as claimed in claim 10 or 11,
**characterised in that**
an indicator system (7) is provided on board, which is manipulated by the evaluation unit (1) in response to the immobilisation command.

13. System as claimed in claim 10 or 11,
**characterised in that**
if the evaluation unit (1) does not detect a location at which immobilisation is safe, the output of the engine is reduced continuously or in stages via the engine management system (6).

## Revendications

1. Procédé pour immobiliser un véhicule à l'aide d'un signal d'immobilisation faisant suite à une demande d'immobilisation, selon lequel un lieu d'immobilisation sûr du point de vue du trafic est déterminé lors d'une évaluation, effectuée dans le véhicule, d'un état actuel de fonctionnement du véhicule selon des critères prédéterminés, le signal d'immobilisation étant produit uniquement lorsque l'état actuel de fonctionnement du véhicule représente un emplacement d'immobilisation sûr du point de vue du trafic, **caractérisé en ce qu'**un premier état de fonctionnement du véhicule est identifié lorsqu'on fait le plein d'essence du véhicule et/ou lorsqu'on complète le niveau d'huile, qu'un second état de fonctionnement du véhicule est identifié lorsque le véhicule est garé, et qu'un troisième état de fonctionnement est identifié lorsque le véhicule est transporté ou est remorqué.

2. Procédé d'immobilisation d'un véhicule selon la revendication 1, **caractérisé en ce que** dans le cas d'une évaluation, effectuée dans le véhicule, d'un lieu actuel du véhicule déterminé par un système de navigation installé dans le véhicule, selon des critères prédéterminés, que le lieu actuel du véhicule est identifié en tant qu'emplacement d'immobilisation sûr du point de vue du trafic ou emplacement d'immobilisation non sûr du point de vue du trafic, le signal d'immobilisation étant produit lorsque le lieu actuel du véhicule correspond à un emplacement d'immobilisation sûr du point de vue du trafic, tandis que la production du signal d'immobilisation est. empêchée lorsque le lieu actuel du véhicule correspond à un emplacement d'immobilisation qui n'est pas sûr du point de vue du trafic.

3. Procédé d'immobilisation selon la revendication 1, **caractérisé en ce que** le premier état de fonctionnement du véhicule est identifié lors de l'évaluation, effectué dans le véhicule, de données d'un capteur du niveau du carburant et/ou d'un capteur du niveau d'huile.

4. Procédé d'immobilisation selon la revendication 1, **caractérisé en ce que** le premier état de fonctionnement du véhicule est identifié lors de l'évaluation, effectuée dans le véhicule, de données d'un capteur de débit, le capteur de débit représentant un débit dans le tubulure de remplissage du réservoir.

5. Procédé d'immobilisation selon la revendication 1 ou 2, **caractérisé en ce qu'**en plus de l'évaluation, effectuée dans le véhicule, de l'état de fonctionnement du véhicule et/ou du lieu actuel du véhicule déterminé par un système de navigation situé dans le véhicule, des signaux de transmission produits à l'intérieur du véhicule sont évalués, les signaux de transmission étant reçus par un dispositif situé dans le véhicule.

6. Procédé d'immobilisation selon la revendication 5, **caractérisé en ce que** les signaux de transmission sont transmis au moyen de boucles d'induction au véhicule, les boucles d'induction étant disposées en des emplacements d'immobilisation sûrs du point de vue du trafic.

7. Procédé d'immobilisation selon la revendication 2, **caractérisé en ce qu'**un premier emplacement d'immobilisation, qui n'est pas sûr du point de vue du trafic, est identifié lorsque le véhicule est situé au niveau d'un croisement ou d'un embranchement et qu'un second emplacement d'immobilisation, qui n'est pas sûr du point de vue du trafic, est identifié lorsque le véhicule est situé au niveau d'un passage à niveau.

8. Procédé d'immobilisation selon la revendication 1 ou 2, **caractérisé en ce que** lorsque l'évaluation effectuée dans le véhicule n'a identifié aucun emplacement d'immobilisation sûr du point de vue du trafic ou a identifié un emplacement d'immobilisation qui n'est pas sûr du point de vue du trafic, une puissance disponible du moteur est réduite continûment ou selon des échelons fixés, au moyen d'une action sur un système électronique du moteur.

9. Procédé d'immobilisation selon la revendication 1 ou 2, **caractérisé en ce que** dans le cas d'une limitation géographique d'utilisation, après le franchissement de la limite de zone prédéterminée au moyen de l'évaluation effectuée dans le véhicule, l'éloignement du lieu actuel du véhicule par rapport à la limite de zone prédéterminée est évalué et, en fonction de l'éloignement du lieu actuel du véhicule par rapport à la limite de zone prédéterminée, la puissance disponible du moteur est manipulée au moyen d'une intervention sur le système électronique du moteur, la puissance disponible du moteur étant réduite continûment ou selon des échelons fixés dans le cas d'un éloignement par rapport à la limite de zone prédéterminée, et étant à nouveau accrue de façon continue ou selon des échelons fixés, lors du rapprochement vers la limite de zone prédéterminée.

10. Dispositif d'immobilisation pour l'immobilisation d'un véhicule à l'aide d'un signal d'immobilisation en un emplacement d'immobilisation conformément à une demande présentée d'immobilisation, **caractérisé en ce qu'**il est prévu, à l'intérieur du véhicule, un dispositif d'identification (2) servant à déterminer une utilisation non autorisée, un dispositif d'évaluation (1) et un dispositif de détection (4) comprenant plusieurs capteurs, selon lequel le dispositif d'évaluation (1) active le dispositif d'identification (2) à l'aide d'une demande d'immobilisation, et le dispositif d'évaluation (1) évalue des données du dispositif de détection (4) pour déterminer si l'état actuel de fonctionnement du véhicule représente un emplacement d'immobilisation sûr du point de vue du trafic et qui est **caractérisé par le fait que** si on fait le plein du véhicule et/ou qu'on complète le niveau d'huile, que le véhicule est garé ou que le véhicule est transporté ou remorqué, et le dispositif d'évaluation (1) produisant le signal d'immobilisation pour l'activation d'un dispositif (5) de blocage contre tout déplacement uniquement lorsque l'état actuel de fonctionnement du véhicule représente un emplacement d'immobilisation sûr du point de vue du trafic.

11. Dispositif pour immobiliser un véhicule selon la revendication 10, **caractérisé en ce qu'**il est prévu, dans le véhicule, un système de navigation (3), le dispositif d'identification (2) activant le dispositif d'évaluation (1) au moyen d'une demande d'immobilisation, et le dispositif d'évaluation (1) évaluant un lieu actuel du véhicule déterminé par le système de navigation (3) dans le sens où le lieu actuel du véhicule correspond à un emplacement d'immobilisation sûr du point de vue du trafic ou à un emplacement d'immobilisation qui n'est pas sûr du point de vue du trafic, et le dispositif d'évaluation (1) produisant le signal d'immobilisation pour activer un dispositif (5) empêchant un déplacement, uniquement lorsque le lieu actuel du véhicule coïncide avec un emplacement d'immobilisation sûr du point de vue du trafic.

12. Dispositif selon la revendication 10 ou 11, **caractérisé en ce qu'**il est prévu, dans le véhicule, un dispositif d'affichage (16), qui est manipulé en fonction de la demande d'immobilisation, par le dispositif d'évaluation (1).

13. Dispositif selon la revendication 10 ou 11, **caractérisé en ce que** lorsque le dispositif d'évaluation (1) n'identifie aucun emplacement d'immobilisation sûr du point de vue du trafic, le dispositif d'évaluation (1) réduit d'une manière continue ou échelonnée la puissance du moteur.
